(19) Europäisches Patentamt
European Patent Office
Office européen des brevets

(11) EP 2 426 519 A1

(12) EUROPEAN PATENT APPLICATION
published in accordance with Art. 153(4) EPC

(43) Date of publication:
07.03.2012 Bulletin 2012/10

(51) Int Cl.:
*G02B 1/11* (2006.01)

(21) Application number: 09844033.2

(22) Date of filing: 01.05.2009

(86) International application number:
PCT/JP2009/058575

(87) International publication number:
WO 2010/125690 (04.11.2010 Gazette 2010/44)

(84) Designated Contracting States:
AT BE BG CH CY CZ DE DK EE ES FI FR GB GR
HR HU IE IS IT LI LT LU LV MC MK MT NL NO PL
PT RO SE SI SK TR

(71) Applicant: Sustainable Titania Technology
Incorporated
Tokyo 151-0053 (JP)

(72) Inventors:
• OGATA Shiro
Tokyo 151-0053 (JP)
• MATSUI Yoshimitsu
Tokyo 151-0053 (JP)

(74) Representative: Desaix, Anne et al
Ernest Gutmann - Yves Plasseraud S.A.S.
3, rue Auber
75009 Paris (FR)

(54) **AGENT FOR INCREASING AMOUNT OF VISIBLE LIGHT TRANSMITTED BY LIGHT-TRANSMITTING BASE AND PROCESS FOR PRODUCING HIGHLY LIGHT-TRANSMITTING BASE WITH THE SAME**

(57) The present invention relates to an agent for increasing an amount of visible light transmitted by a light-transmissive substrate containing an organic silicon compound and an inorganic silicon compound, and a process for producing a highly light-transmissive substrate using the aforementioned agent for increasing an amount of transmitted visible light, as well as, a process for increasing an amount of visible light transmitted by a light-transmissive substrate **characterized by** forming a layer containing an organic silicon compound and inorganic silicon compound on the surface of a light-transmissive substrate. The aforementioned agent for increasing an amount of transmitted visible light and the aforementioned layer preferably further contain titanium oxide, and the aforementioned titanium oxide is preferably a metal-doped titanium oxide. In accordance with the present invention, a substrate having a reduced reflectivity and also having an increased transmittance, and therefore exhibiting improved optical properties, can be produced by using a simple method regardless of the material or form of the substrate.

FIG. 1

**Description**

TECHNICAL FIELD

The present invention relates to an agent for increasing an amount of visible light transmitted through a light-transmissive substrate, and a process for producing a highly light-transmissive substrate characterized by carrying out a surface treatment with the aforementioned agent for increasing an amount of transmitted visible light, as well as a process for increasing an amount of visible light transmitted through a light-transmissive substrate.

BACKGROUND ART

Conventionally, in order to improve the functionality of an optical element having a light transmission function, an improvement in light-transmissive properties of the aforementioned optical element has been desired. For example, in an optical element such as a lens or the like, glass with increased transparency is used as a substrate or an organic polymer film for reducing a reflectivity is applied to the surface of a substrate. However, use of glass with increased transparency has a problem in terms of economics. In addition, in the case of applying the organic polymer film, it is difficult to uniformly control the thickness of a very thin film so as not to affect the optical properties of the lens and the like. In addition, in optical members such as cells for use in solar photovoltaics and optical elements such as light-emitting devices of various imaging devices, functional properties may be varied by the amount of transmitted light. In order to obtain an increased amount of transmitted light, light-transmissive performance should be improved. However, it is difficult to increase an amount of transmitted light.

In addition, Japanese Unexamined Patent Application, First Publication No. S50-70040 describes that a microasperity surface having a specified pattern is formed by carrying out an etching treatment on the surface of a lens substrate in order to reduce the reflectivity. However, laser interference is utilized in the etching treatment, and for this reason, a treatment apparatus must be large. In addition, in the case of using a lens substrate having a curved surface, it is difficult to form asperity on the aforementioned curved surface. In addition, in the aforementioned process, the amount of transmitted light cannot increase so that the amount of increased transmitted light is greater than the amount of reducing reflected light.

PRIOR ART DOCUMENTS

Patent Document

Patent Document 1: Japanese Unexamined Patent Application, First Publication No. S50-70040

DISCLOSURE OF THE INVENTION

Problems to be Solved by the Invention

The present invention was completed in view of the aforementioned prior art. The present invention has an objective of increasing an amount of visible light transmitted through a substrate by means of a simple process applicable regardless of the material or form of the substrate.

Means for Solving the Problems

The objective of the present invention can be achieved by forming a layer containing an organic silicon compound and an inorganic silicon compound on the surface of a light-transmissive substrate. The aforementioned layer can be formed by applying an agent for increasing an amount of transmitted visible light, which contains an organic silicon compound and an inorganic silicon compound, to the light-transmissive substrate, and then carrying out a heat treatment or a non-heat treatment. "Heat treatment" used herein means heating to a temperature exceeding room temperature (room temperature = 20°C to 30°C and preferably 25°C), and includes exposure to sunlight outdoors for a specified period (for example, the temperature may reach 50°C to 100°C). On the other hand, "non-heat treatment" means maintaining for a specified period at room temperature.

The aforementioned layer and the aforementioned agent for increasing an amount of transmitted visible light preferably comprise titanium oxide. In addition, as the titanium oxide, a metal-doped titanium oxide is preferable. The aforementioned titanium oxide may be titanium peroxide. In addition, at least one part of the aforementioned substrate is preferably formed from a resin, a metal or glass.

The aforementioned agent for increasing an amount of transmitted visible light preferably comprises a thermally-degradable organic compound. In this case, the aforementioned heat treatment is preferably carried out at temperatures of 400°C or more.

The aforementioned thermally-degradable organic compound can be a sugar or a sugar alcohol. The sugar can be at least one selected from the group consisting of monosaccharides and disaccharides. On the other hand, the aforementioned thermally-degradable organic compound may be a water-soluble organic polymer.

The aforementioned agent for increasing an amount of transmitted visible light can further comprise one or more types of positively-charged substances selected from the group consisting of: (1) a positive ion; (2) a conductor or dielectric having positive charges; and (3) a composite formed from a conductor, and a dielectric or a semiconductor, having positive charges.

The aforementioned agent for increasing an amount of transmitted visible light can further comprise one or more types of negatively-charged substances selected from the group consisting of: (4) a negative ion; (5) a conductor or dielectric having negative charges; (6) a composite formed from a conductor, and a dielectric or a semiconductor, having negative charges; and (7) a substance having a photocatalytic function.

The aforementioned agent for increasing an amount of transmitted visible light can comprise both the aforementioned positively-charged substance and the aforementioned negatively-charged substance.

In the present invention, "light" means electromagnetic waves such as ultraviolet light, visible light, infrared light, and the like. "Visible light" means electromagnetic waves having a wavelength ranging from 380 nm to 780 nm.

EFFECTS OF THE INVENTION

In accordance with the present invention, an amount of visible light transmitted by a light-transmissive substrate can increase through means of a simple process regardless of the material or form of the substrate. Therefore, according to the present invention, a highly light-transmissive substrate can be easily and economically produced. The substrate obtained by the present invention is, in particular, preferable as a component for an optical element, or an optical member in which a high transmissive property of electromagnetic waves such as light and the like is required.

A layer containing an organic silicon compound and an inorganic silicon compound (preferably titanium oxide, and in particular, a metal-doped titanium oxide) is formed on the surface of a light-transmissive substrate, by applying an agent for increasing an amount of transmitted visible light comprising the organic silicon compound and inorganic silicon compound, and preferably further comprising the titanium oxide, and in particular, the metal-doped titanium oxide to the light-transmissive substrate, and carrying out a heat treatment or non-heat treatment. At this time, in the case in which the aforementioned agent for increasing an amount of transmitted visible light further comprises a thermally-degradable organic compound, after heating, a microasperity structure is formed on the surface of the aforementioned layer, and thereby, the surface area increases, and light scattering is reduced. For this reason, the amount of visible light further increases, and the reflectivity of the light-transmissive substrate is reduced, and the amount of light transmitted through the light-transmissive substrate can further increase.

In addition, in the case in which the aforementioned agent for increasing an amount of transmitted visible light comprises a positively-charged substance and/or a negatively-charged substance, contamination of the surface of a light-transmissive substrate can be prevented. For this reason, effects of increasing the amount of transmitted light can be maintained for a long time.

BRIEF DESCRIPTION OF THE DRAWINGS

FIG. 1 is a drawing showing an outline of an example of a first method for manufacturing a metal-doped titanium peroxide.

FIG. 2 is a conceptual diagram showing a mechanism of imparting positive charges by a composite.

FIG. 3 is a conceptual diagram showing a mechanism of removing contaminants from the surface of the substrate which carries positive charges.

FIG. 4 is a conceptual diagram showing an example of a mechanism of imparting positive charges and negative charges in the present invention.

FIG. 5 is a conceptual diagram showing another example of a mechanism of imparting positive charges and negative charges in the present invention.

FIG. 6 is a conceptual diagram showing a mechanism of removing contaminants from the surface of the substrate which carries positive charges and negative charges.

BEST MODES FOR CARRYING OUT THE INVENTION

In general, an amount of light passing through a light-transmissive substrate corresponds to an amount obtained by subtracting an amount of light reflected on the surface of the light-transmissive substrate from an amount of light incoming to the light-transmissive substrate, in the case of removing an amount of light absorbed by the substrate. In other words, the following equation is provided.

```
(Amount of light transmitted through a light-transmissive
substrate) = (Amount of light incoming to the light-
transmissive substrate) − (Amount of light reflected on the
surface of the light-transmissive substrate)
```

The present inventors discovered that by forming a layer comprising an organic silicon compound and an inorganic silicon compound on the surface of a light-transmissive substrate, contrary to expectations, an amount of visible light transmitted through the aforementioned light-transmissive substrate is greater than an amount obtained by subtracting an amount of light reflected on the surface of the light-transmissive substrate (and an amount of light absorbed by the substrate) from an amount of light incoming to the light-transmissive substrate. Thereby, the present invention was completed. In addition, when titanium oxide is added to the aforementioned layer, the amount of transmitted visible light can further increase. When a metal-doped titanium oxide is used as the aforementioned titanium oxide, the amount of transmitted visible light can further increase.

Namely, in accordance with the present invention, the amount of visible light transmitted through the light-transmissive substrate increases, and the following relationship is provided.

```
(Amount of visible light transmitted through the light-
transmissive substrate) > (Amount of incoming visible light
to the light-transmissive substrate) − ((Amount of visible
light reflected on the light-transmissive substrate) +
(Amount of light absorbed by the substrate))
```

It is believed that the amount of visible light transmitted through the light-transmissive substrate may increase since the layer comprising an organic silicon compound and an inorganic silicon compound, the layer comprising an organic silicon compound, an inorganic silicon compound and titanium oxide, or the layer comprising an organic silicon compound, an inorganic silicon compound, and a metal-doped titanium oxide, per se, radiates visible light. It is believed that the aforementioned layer radiates visible light since atoms or molecules in the aforementioned layer are under an excited state by means of electromagnetic waves out of the visible light region such as ultraviolet light or the like, and at the time of returning to the ground state from the excited state, visible light is emitted. The principle in that molecules excited by electromagnetic waves with a shorter wavelength (having the higher energy) such as ultraviolet light emit electromagnetic waves with a longer wavelength (having the lower energy) such as visible light as fluorescence has been established, for example, in the field of a fluorescent brightener widely used in the field of clothing material or paper manufacturing. In any event, the present invention utilizes visible light radiation phenomena in which the layer comprising an organic silicon compound and an inorganic silicon compound, the layer comprising an organic silicon compound, an inorganic silicon compound and titanium oxide, or the layer comprising an organic silicon compound, an inorganic silicon compound, and a metal-doped titanium oxide is involved. It is also believed that a positively-charged substance and/or a negatively-charged substance may contribute in some way to the aforementioned visible light radiation phenomena. For this reason, the positively-charged substance or the negatively-charged substance may be preferably contained.

In the present invention, an agent for increasing an amount of visible light transmitted through a light-transmissive substrate, which comprises (a) an organic silicon compound and an inorganic silicon compound, (b) an organic silicon compound, an inorganic silicon compound and titanium oxide, or (c) an organic silicon compound, an inorganic silicon compound, and a metal-doped titanium oxide, is applied to the light-transmissive substrate, and subjected to a heat treatment or a non-heat treatment. Thereby, a layer comprising an organic silicon compound and an inorganic silicon compound; an organic silicon compound, an inorganic silicon compound and titanium oxide; or an organic silicon compound, an inorganic silicon compound, titanium oxide and a metal-doped titanium oxide is formed on the light-transmissive substrate, and thereby, an amount of transmitted visible light is increased. Namely, the present invention also relates to a process for producing a highly light-transmissive substrate using the aforementioned agent for increasing an amount of transmitted visible light, or a process for increasing an amount of visible light transmitted through a light-transmissive substrate using the aforementioned agent for increasing an amount of transmitted visible light.

As the substrate to be surface-treated by the present invention, various light-transmissive substrates can be used. The materials for the substrates are not particularly restricted. Hydrophilic or hydrophobic inorganic substrates and organic substrates or combinations thereof can be employed.

As examples of the inorganic substrates, mention may be made of, for example, substrates formed from substances of transparent or opaque glass such as soda lime glass, quartz glass, heat resistant glass or the like, or metal oxides such as indium tin oxide (ITO) or the like, and silicon or a metal and the like. In addition, as examples of the organic substrates, mention may be made of, for example, substrates formed from plastics. As detailed examples of the plastics, mention may be made of, for example, thermoplastic resins such as polyethylene, polypropylene, polycarbonate, acrylic resins, polyester such as PET or the like, polyamide, ABS resins, polyvinyl chloride or the like, and thermosetting resins such as polyurethane, melamine resins, urea resins, silicone resins, fluorine resins, epoxy resins or the like. In view of heat resistance, inorganic substrates are preferable, and in particular, at least one part or whole parts of the substrate are preferably formed from resin, metal or glass. As materials of the organic substrates, thermosetting resins are preferable.

The shape of the substrate is not particularly restricted, and any shapes such as cubics, cuboids, spheres, spindles, sheets, films, fibers, or the like can be employed. The surface of the substrate may be subjected to a hydrophobic treatment or a hydrophilic treatment such as a corona discharge treatment, a UV exposure treatment, or the like. The surface of the substrate may have a flat surface and/or a curved surface, and may be subjected to embossing. A flat and smooth surface is preferable.

The agent for increasing an amount of transmitted visible light used in the present invention is preferably a liquid composition comprising: at least, an organic silicon compound; and an inorganic silicon compound. The agent for increasing an amount of transmitted visible light furthermore preferably comprises titanium oxide, and in particular, a metal-doped titanium oxide.

The titanium oxide used in the present invention means an oxide of titanium, and examples thereof include, for example, various titanium monoxide, titanium dioxide, titanium peroxide and the like, such as $TiO$, $TiO_2$, $TiO_3$, $TiO_3/nH_2O$ and the like. In particular, titanium peroxide having a peroxy group is preferable. In addition, the titanium oxide is preferably in the form of fine particles. The titanium oxide may be in an amorphous form or in any crystalline form of anatase-type, brookite-type, and rutile-type. Amorphous-type titanium oxide is preferable. In particular, a mixture of amorphous-type titanium oxide and anatase-type titanium oxide is preferable. As the titanium oxide, commercially available sols of various crystalline types of titanium oxide can be used.

As the metal contained in the metal-doped titanium oxide, at least one metal element selected from the group consisting of gold, silver, platinum, copper, zirconium, manganese, nickel, cobalt, tin, iron, zinc, germanium, hafnium, yttrium, lanthanum, cerium, palladium, vanadium, niobium, calcium, and tantalum is preferable. As the metal-doped titanium oxide, a mixture of a commercially available sol of various crystalline types of the titanium oxide and a sol of various types of the metal can be used.

As the metal-doped titanium oxide, in particular, a metal-doped titanium peroxide is preferable. As a method for manufacturing the aforementioned metal-doped titanium peroxide, a manufacturing method based on a hydrochloric acid method or sulfuric acid method which is a general method for manufacturing titanium dioxide powders may be employed, or a manufacturing method using any of various liquid dispersion titania solutions may be employed. The aforementioned metal can form a composite with titanium peroxide in any step of the manufacturing method.

Titanium peroxide used in the present invention is preferably amorphous-type. In particular, a mixture of amorphous-type titanium peroxide and anatase-type titanium peroxide is preferable.

As a method for manufacturing the aforementioned metal-doped titanium peroxide, a manufacturing method based on a hydrochloric acid method or sulfuric acid method which is a general method for manufacturing titanium dioxide powders may be employed, or a manufacturing method using any of various liquid dispersion titania solutions may be employed. The aforementioned metal can form a composite with titanium peroxide in any step of the manufacturing method.

For example, examples of a method for manufacturing the aforementioned metal-doped titanium peroxide include the first to third manufacturing methods described below, and a sol-gel method which is conventionally known.

First Manufacturing Method

First, a compound of tetravalent titanium such as titanium tetrachloride or the like and a base such as ammonia or the like are reacted together to form titanium hydroxide. Subsequently, the aforementioned titanium hydroxide is peroxidized with an oxidizing agent to form ultra-fine particles of amorphous-type titanium peroxide. The aforementioned reaction is preferably carried out in an aqueous medium. In addition, if a heating treatment is carried out, the amorphous-type titanium peroxide can be converted into anatase-type titanium peroxide. In one of the aforementioned steps, at least one of gold, silver, platinum, copper, zirconium, manganese, nickel, cobalt, tin, iron, zinc, germanium, hafnium, yttrium, lanthanum, cerium, palladium, vanadium, niobium, calcium, tantalum, and compounds thereof is mixed therein.

The oxidizing agent for use in peroxidation is not particularly restricted. Various oxidizing agents can be employed as long as a peroxide of titanium, that is, titanium peroxide, can be produced. Hydrogen peroxide is preferable. In the case of employing an aqueous solution of hydrogen peroxide as an oxidizing agent, the concentration of hydrogen peroxide is not particularly restricted. A concentration thereof ranging from 30% to 40% is preferable. Before the peroxidation reaction is carried out, titanium hydroxide is preferably cooled. The cooling temperature preferably ranges from 1°C to 5°C.

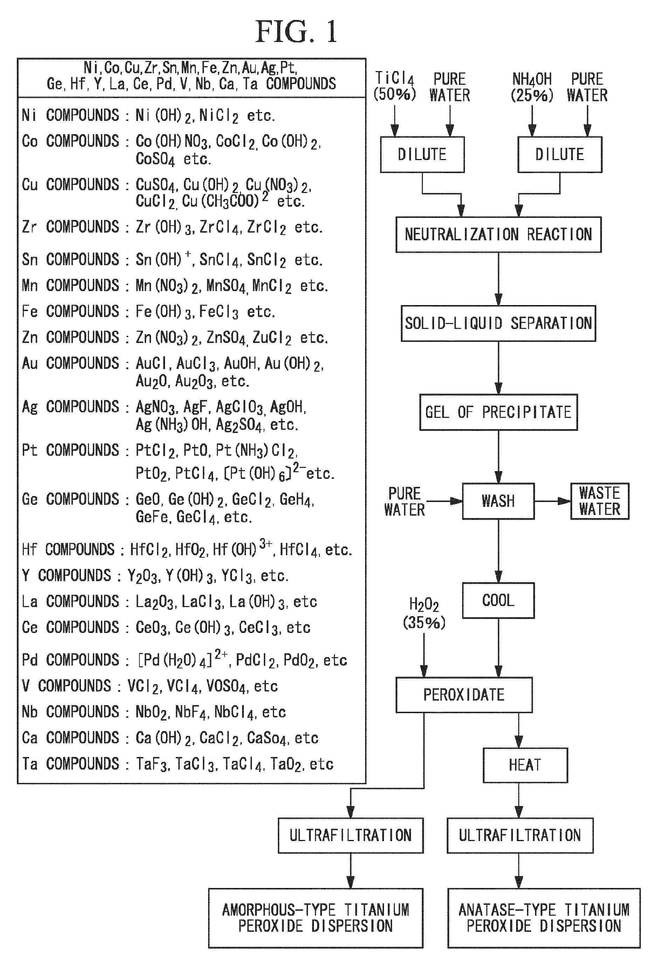

One example of the aforementioned first manufacturing method is shown in FIG. 1. In the manufacturing method shown therein, an aqueous solution of titanium tetrachloride and aqueous ammonia are mixed together in the presence of at least one of gold, silver, platinum, copper, zirconium, manganese, nickel, cobalt, iron, tin, zinc, germanium, hafnium, yttrium, lanthanum, cerium, palladium, vanadium, niobium, calcium, tantalum, and compounds thereof and thereby a mixture of a hydroxide of the aforementioned metal and a hydroxide of titanium is produced. Here, there are no particular limitations on the concentration or temperature of the reaction mixture, but the reaction is preferably carried out in a dilute solution at room temperature. The aforementioned reaction is a neutralization reaction, and therefore, it is preferable to finally adjust the pH of the reaction mixture to approximately pH 7.

The hydroxides of the metal and titanium obtained above are washed with pure water, followed by cooling to approximately 5°C. Subsequently, the hydroxides are peroxidized with an aqueous solution of hydrogen peroxide. Thereby, an aqueous dispersion containing fine particles of amorphous-type titanium peroxide having a peroxy group which contains a metal, i.e. an aqueous dispersion containing a metal-doped titanium peroxide, can be produced.

Second Manufacturing Method

A compound of tetravalent titanium such as titanium tetrachloride or the like is peroxidized with an oxidizing agent, and the peroxidized product is reacted with a base such as ammonia or the like to form ultra-fine particles of amorphous-type titanium peroxide. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of gold, silver, platinum, copper, zirconium, manganese, nickel, cobalt, tin, iron, zinc, germanium, hafnium, yttrium, lanthanum, cerium, palladium, vanadium, niobium, calcium, tantalum, and compounds thereof is mixed therein.

Third Manufacturing Method

A compound of tetravalent titanium such as titanium tetrachloride or the like is reacted together with an oxidizing agent and a base to carry out formation of titanium hydroxide and peroxidation thereof at the same time, and thereby, ultra-fine particles of amorphous-type titanium peroxide are formed. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of gold, silver, platinum, copper, zirconium, manganese, nickel, cobalt, tin, iron, zinc, germanium, hafnium, yttrium, lanthanum, cerium, palladium, vanadium, niobium, calcium, tantalum, and compounds thereof is mixed therein.

In the first to third manufacturing methods, a mixture of the amorphous-type titanium peroxide and the anatase-type titanium peroxide obtained by heating the aforementioned amorphous-type titanium peroxide can be employed as a metal-doped titanium peroxide.

Manufacturing Method Using Sol-Gel Method

A solvent such as water, an alcohol or the like, and an acid or base catalyst are mixed and stirred with a titanium alkoxide to hydrolyze the titanium alkoxide. As a result, a sol solution of ultra-fine particles of titanium peroxide is produced. Before or after the hydrolysis step, at least one of gold, silver, platinum, copper, zirconium, manganese, nickel, cobalt, tin, iron, zinc, germanium, hafnium, yttrium, lanthanum, cerium, palladium, vanadium, niobium, calcium, tantalum, and compounds thereof is mixed therein. The titanium peroxide obtained above is an amorphous-type one having a peroxy group.

As the aforementioned titanium alkoxide, a compound represented by the following general formula: $Ti(OR')_4$, wherein R' is an alkyl group, or a compound in which one or two of the alkoxide groups (OR') in the aforementioned general formula have been substituted with carboxyl groups or beta-dicarbonyl groups, or a mixture thereof is preferable.

Specific examples of the aforementioned titanium alkoxide include $Ti(O\text{-}iso\text{-}C_3H_7)_4$, $Ti(O\text{-}n\text{-}C_4H_9)_4$, $Ti(O\text{-}CH_2CH(C_2H_5)C_4H_9)_4$, $Ti(O\text{-}C_{17}H_{35})_4$, $Ti(O\text{-}iso\text{-}C_3H_7)_2[CO(CH_3)CHCOCH_3]_2$, $Ti(O\text{-}nC_4H_9)_2[OC_2H_4N(C_2H_4OH)_2]_2$, Ti

$(OH)_2[OCH(CH_3)COOH]_2$, $Ti(OCH_2CH(C_2H5)CH(OH)C_3H_7)_4$, and $Ti(O-nC_4H_9)_2(OCOC_{17}H_{35})$, and the like.

Compound of Tetravalent Titanium

As the compound of tetravalent titanium employed in the manufacture of the metal-doped titanium peroxide, various titanium compounds can be employed as long as titanium hydroxide, also known as ortho-titanic acid ($H_4TiO_4$), can be formed upon reacting with a base. Examples thereof include titanium salts of water-soluble inorganic acids such as titanium tetrachloride, titanium sulfate, titanium nitrate, and titanium phosphate. Other examples include titanium salts of water-soluble organic acids such as titanium oxalate, or the like. Among the various titanium compounds described above, titanium tetrachloride is preferable since superior water solubility is exhibited, and there are no remaining components other than titanium in the dispersion of a metal-doped titanium peroxide.

In addition, in the case of employing a solution of a compound of tetravalent titanium, the concentration of the aforementioned solution is not particularly restricted as long as a gel of titanium hydroxide can be formed, but a relatively dilute solution is preferable. Specifically, the concentration of the compound of tetravalent titanium preferably ranges from 5% by weight to 0.01% by weight, and more preferably ranges from 0.9% by weight to 0.3% by weight.

Base

As a base to be reacted with the aforementioned compound of tetravalent titanium, various bases can be employed as long as titanium hydroxide can be formed by reacting with the compound of tetravalent titanium. Examples thereof include ammonia, sodium hydroxide, sodium carbonate, potassium hydroxide or the like. Ammonia is preferable.

In addition, in the case of employing a solution of the aforementioned base, the concentration of the aforementioned solution is not particularly restricted as long as a gel of titanium hydroxide can be formed, but a relatively dilute solution is preferable. Specifically, the concentration of the basic solution preferably ranges from 10% by weight to 0.01% by weight, and more preferably ranges from 1.0% by weight to 0.1% by weight. In particular, in the case of employing aqueous ammonia as the basic solution, the concentration of ammonia preferably ranges from 10% by weight to 0.01% by weight, and more preferably ranges from 1.0% by weight to 0.1% by weight.

Metal Compound

As examples of compounds of gold, silver, platinum, copper, zirconium, manganese, nickel, cobalt, tin, iron, zinc, germanium, hafnium, yttrium, lanthanum, cerium, palladium, vanadium, niobium, calcium, and tantalum, mention may be made of the compounds described below.

Au compounds: $AuCl$, $AuCl_3$, $AuOH$, $Au(OH)_2$, $Au_2O$, $Au_2O_3$
Ag compounds: $AgNO_3$, $AgF$, $AgClO_3$, $AgOH$, $Ag(NH_3)OH$, $Ag_2SO_4$
Pt compounds: $PtCl_2$, $PtO$, $Pt(NH_3)Cl_2$, $PtO_2$, $PtCl_4$, $[Pt(OH)_6]^{2-}$
Ni compounds: $Ni(OH)_2$, $NiCl_2$
Co compounds: $Co(OH)NO_3$, $Co(OH)_2$, $CoSO_4$, $CoCl_2$
Cu compounds: $Cu(OH)_2$, $Cu(NO_3)_2$, $CuSO_4$, $CuCl_2$, $Cu(CH_3COO)_2$
Zr compounds: $Zr(OH)_3$, $ZrCl_2$, $ZrCl_4$
Mn compounds: $MnNO_3$, $MnSO_4$, $MnCl_2$
Sn compounds: $SnCl_2$, $SnCl_4$, $[Sn(OH)]^+$
Fe compounds: $Fe(OH)_2$, $Fe(OH)_3$, $FeCl_3$
Zn compounds: $Zn(NO_3)_2$, $ZnSO_4$, $ZnCl_2$
Ge compounds: $GeO$, $Ge(OH)_2$, $GeCl_2$, $GeH_4$, $GeFe$, $GeCl_4$
Hf compounds: $HfCl_2$, $HfO_2$, $Hf(OH)_3^+$, $HfCl_4$
Y compounds: $Y_2O_3$, $Y(OH)_3$, $YCl_3$
La compounds : $La_2O_3$, $LaCl_3$, $La(OH)_3$
Ce compounds: $CeO_3$, $Ce(OH)_3$, $CeCl_3$
Pd compounds: $[Pd(H_2O)_4]^{2+}$, $PdCl_2$, $PdO_2$
V compounds: $VCl_2$, $VCl_4$, $VOSO_4$
Nb compounds: $NbO_2$, $NbF_4$, $NbCl_4$
Ca compounds: $Ca(OH)_2$, $CaCl_2$, $CaSO_4$
Ta compounds: $TaF_3$, $TaCl_3$, $TaCl_4$, $TaO_2$

The concentration of titanium peroxide in the aqueous dispersion obtained in accordance with the first to third manufacturing methods (the total amount including coexisting gold, silver, platinum, copper, zirconium, manganese, nickel, cobalt, tin, iron, zinc, germanium, hafnium, yttrium, lanthanum, cerium, palladium, vanadium, niobium, calcium, and tantalum) preferably ranges from 0.05 to 15% by weight, and more preferably ranges from 0.1 to 5% by weight. In addition, regarding the content of gold, silver, platinum, copper, zirconium, manganese, nickel, cobalt, tin, iron, zinc, germanium, hafnium, yttrium, lanthanum, cerium, palladium, vanadium, niobium, calcium, or tantalum, the molar ratio of titanium and the aforementioned metal component is preferably 1:1 in the present invention. In view of stability of the aqueous dispersion, the ratio preferably ranges from 1:0.01 to 1:0.5, and more preferably ranges from 1:0.03 to 1:0.1.

As examples of a commercially available titanium peroxide, mention may be made of, for example, an aqueous dispersion of amorphous-type titanium peroxide SP 185, an aqueous dispersion of silica-doped amorphous-type titanium peroxide SPS 185, an aqueous dispersion of copper and zirconium-doped titania Z18-1000 Super A, and an aqueous dispersion of silver-doped titania SP-10 (manufactured by SUSTAINABLE TITANIA TECHNOLOGY INC.).

The agent for increasing an amount of transmitted visible light used in the present invention preferably contains anatase-type titanium peroxide together with the metal-doped amorphous-type titanium peroxide obtained as described above. As the anatase-type titanium peroxide, one in which amorphous-type titanium peroxide is transferred to anatase-type titanium peroxide by heating (typically, after application to the surface of a light-transmissive substrate) may be used, but one in which amorphous-type titanium peroxide is not transferred to anatase-type titanium peroxide by heating is preferable. Namely, the anatase-type titanium peroxide contained in the agent for increasing an amount of transmitted visible light may be one formed *in situ* by transferring a part of amorphous-type titanium peroxide by heating, but one in which at least one part (preferably the whole part) thereof is independently added from the outside is preferable.

The concentration of titanium peroxide in the aforementioned agent for increasing an amount of transmitted visible light can be changed in accordance with the degree of surface treatment of the substrate. The concentration typically ranges from 0.01% by weight to 90% by weight, preferably ranges from 0.1% by weight to 50% by weight, and more preferably ranges from 1% by weight to 20% by weight.

In the case of applying the aforementioned agent for increasing an amount of transmitted visible light to, for example, a heat-resistant inorganic substrate or a substrate formed from a thermocurable resin, a thermally-degradable organic compound is preferably contained in the agent. The thermally-degradable organic compound is not particularly restricted as long as the compound is an organic compound which can be degraded by heating. The thermally-degradable organic compound which is degraded by heating to generate a gas such as a carbon dioxide gas is preferable. The heating temperature is preferably 300°C or higher, more preferably 400°C or higher, and further preferably 450°C or higher. As examples of thermally-degradable organic compounds, mention may be made of, for example, a sugar or sugar alcohol, a water-soluble organic polymer, and a mixture thereof. A sugar or sugar alcohol is preferable, and a sugar is more preferable.

Here, "sugar" means a hydrocarbon having many hydroxyl groups and carbonyl groups, and examples thereof include monosaccharides, disaccharides, oligosaccharides, polysaccharides and the like. As examples of monosaccharides, mention may be made of glucose, fructose, galactose, mannose, ribose, erythrose, and the like. As examples of disaccharides, mention may be made of maltose, lactose, sucrose and the like. As examples of oligosaccharides, mention may be made of fructooligosaccharides, galacto-oligosaccharides and the like. As examples of polysaccharides, mention may be made of starch, cellulose, pectin and the like. They may be used alone or in combination. In view of usability, sugars with increased water-solubility are preferable. Therefore, in the present invention, one selected from the group consisting of monosaccharides and disaccharides or a mixture of two or more types thereof is preferably used.

"Sugar alcohol" is a product in which the carbonyl group of a sugar is reduced. As examples of sugar alcohols, mention may be made of, for example, erythritol, threitol, arabinitol, xylitol, ribitol, mannitol, sorbitol, maltitol, inositol and the like. They may be used alone or as a mixture of two or more types thereof.

As the "water-soluble organic polymer", any thermally-degradable organic polymers can be used as long as they are soluble in water. As examples thereof, mention may be made of polyether such as polyethylene glycol, polypropylene glycol, polyethylene glycol-polypropylene glycol block copolymer or the like; polyvinyl alcohol; polyacrylic acid (including salts such as alkali metal salts, ammonium salts and the like), polymethacrylic acid (including salts such as alkali metal salts, ammonium salts and the like), polyacrylic acid-polymethacrylic acid (including salts such as alkali metal salts, ammonium salts and the like) copolymer; polyacrylamide; polyvinylpyrrolidone and the like.

The aforementioned water-soluble organic polymer may be used alone. However, the water-soluble organic polymer can also function as a solubilizing agent of a sugar or sugar alcohol. For this reason, the water-soluble organic polymer can be blended together with the sugar or sugar alcohol. Thereby, the sugar or sugar alcohol can be dissolved well in the agent for increasing an amount of transmitted visible light.

The concentration of the thermally-degradable organic compound in the case of containing the thermally-degradable organic compound in the aforementioned agent for increasing an amount of transmitted visible light can be suitably varied in accordance with the degree of surface treatment of the substrate. The concentration typically ranges from 0.01% by weight to 20% by weight, preferably ranges from 0.05% by weight to 15% by weight, and more preferably ranges from 1.0% by weight to 10% by weight.

As examples of the organic silicon compound, mention may be made of, for example, various types of organic silane compounds and silicones such as silicone oils, silicone gums, silicone resins and the like. They may be used alone or as a mixture thereof. As the silicones, one having an alkyl silicate structure or a polyether structure, or one having both an alkyl silicate structure and a polyether structure, in the molecule thereof, is preferable. Here, the alkylsilicate structure refers to a structure in which at least one alkyl group is bonded to silicon atoms in the siloxane backbone. On the other hand, the polyether structure refers to a structure having at least one ether bond. As examples of the polyether structure, mention may be made of molecular structures such as polyethylene oxide, polypropylene oxide, polytetramethylene oxide, a block copolymer of polyethylene oxide and polypropylene oxide, a copolymer of polyethylene and polytetramethylene glycol, or a copolymer of polytetramethylene glycol and polypropylene oxide, although the polyether structures are not restricted thereto. Among these, a block copolymer of polyethylene oxide and polypropylene oxide is particularly suitable in view of controllability of the wettability on the surface of the substrate by the degree of blocking or the molecular weight.

As the organic compound, a silicone having both an alkylsilicate structure and a polyether structure in the molecule thereof is particularly preferable. Specifically, a polyether-modified silicone such as polyether-modified polydimethylsiloxane or the like is suitable. The polyether-modified silicone can be manufactured using a generally known method, for example, using a method described in Synthesis Example 1, 2, 3 or 4 in Japanese Unexamined Patent Application, First Publication No. H04-242499 or the Reference Example in Japanese Unexamined Patent Application, First Publication No. H09-165318. In particular, a polyethylene oxide-polypropylene oxide block copolymer-modified polydimethylsiloxane obtained by reacting a block copolymer of both-end-metallyl polyethylene oxide-polypropylene oxide with dihydropolydimethylsiloxane is suitable. Specifically, TSF 4445 or TSF 4446 (both manufactured by GE Toshiba Silicones Co., Ltd.), KP series (manufactured by Shin-Etsu Chemical Co., Ltd.), SH 200, SH 3746M, DC 3PA or ST 869A (all manufactured by Dow Corning Toray Silicone Co., Ltd.) or the like can be employed.

The concentration of the organic silicon compound in the aforementioned agent for increasing an amount of transmitted visible light can be suitably varied in accordance with the degree of surface treatment of the substrate. The concentration typically ranges from 0.01% by weight to 5.0% by weight, preferably ranges from 0.05% by weight to 2.0% by weight, and more preferably ranges from 0.1% by weight to 1.0% by weight.

As examples of inorganic silicon compounds used in the present invention, mention may be made of silica (silicon dioxide), silicon nitride, silicon carbide, silane and the like, and silica is preferable. As the silica, fumed silica, colloidal silica, precipitated silica or the like can be used, and colloidal silica is preferable. As a commercially available colloidal silica, for example, PL-1 or PL-3 (manufactured by FUSO CHEMICAL CO., LTD.), as a polysilicate, WM-12 (manufactured by TAMA CHEMICALS CO., LTD.), Silica Sol 51 (manufactured by COLCOAT CO., LTD.) or the like can be used.

The concentration of the inorganic silicon compound in the aforementioned agent for increasing an amount of transmitted visible light can be suitably varied in accordance with the degree of surface treatment of the substrate. The concentration typically ranges from 0.01% by weight to 98% by weight, preferably ranges from 0.1% by weight to 90% by weight, and more preferably ranges from 10.0% by weight to 80% by weight.

The agent for increasing an amount of transmitted visible light of the present invention preferably contains an aqueous medium which is water, alcohol or a mixture thereof, or a non-aqueous medium such as an organic solvent or the like. In view of solubility of thermally-degradable organic compounds, the agent for increasing an amount of transmitted visible light of the present invention preferably contains the aqueous medium. The concentration of the medium typically ranges from 50% by weight to 99.9% by weight, preferably ranges from 60% by weight to 99% by weight, and more preferably ranges from 70% by weight to 97% by weight.

The aforementioned agent for increasing an amount of transmitted visible light of the present invention is applied to the surface of a light-transmissive substrate and then subjected to a heat treatment or a non-heat treatment. Thereby, a layer containing an organic silicon compound and an inorganic silicon compound is formed on the surface of the light-transmissive substrate, and an amount of visible light transmitted through the light-transmissive substrate increases. The application means and application methods of the agent for increasing an amount of transmitted visible light are not particularly restricted, and any means and methods can be used. For example, any application method such as a dip coating method, a spray coating method, a roll coating method, a spin coating method, a sponge coating method or the like can be used.

The temperature in the case of heating is not particularly restricted, and for example, heating to any temperature which is 30°C or higher can be carried out. In the case of containing a thermally-degradable organic compound, the temperature is preferably 300°C or higher, more preferably 400°C or higher, and furthermore preferably 450°C or higher. The upper limit of the heating temperature is not particularly restricted. In view of the effects on various properties of the substrate, not more than 1,000°C is preferable, not more than 850°C is more preferable, and not more than 800°C is furthermore preferable. The heating period is not particularly restricted as long as carbonization of the thermally-degradable organic compound can be sufficiently carried out. The heating period preferably ranges from one minute to 3 hours, more preferably ranges from one minute to one hour, and furthermore preferably ranges from one minute to 30 minutes.

In the case of containing titanium peroxide in the agent for increasing an amount of transmitted visible light, titanium peroxide changes to titanium oxide (titanium dioxide) by heating. At this time, amorphous-type titanium oxide is transferred to anatase-type titanium oxide (in general, amorphous-type titanium oxide is transferred to anatase-type titanium oxide by heating for two or more hours at 100°C). Therefore, in the case in which amorphous-type titanium peroxide is contained in the agent for increasing an amount of transmitted visible light of the present invention, anatase-type titanium oxide obtained by the process of amorphous-type titanium peroxide, amorphous-type titanium oxide → anatase-type titanium oxide is present on the surface of the substrate. In addition, in the case in which anatase-type titanium peroxide is already contained in the aforementioned agent for increasing an amount of transmitted visible light, it changes to anatase-type titanium oxide by heating.

In the case in which the aforementioned agent for increasing an amount of transmitted visible light contains a thermally-degradable organic compound, on the surface of the substrate which has been heat-treated, a porous layer having plural microasperities on the surface thereof is formed by ejection of decomposed products (such as carbon dioxide gas and the like) derived from the thermally-degradable organic compound. By virtue of the aforementioned microasperities, the reflectivity of the surface of the substrate is reduced. As a result, the light transmittance of the substrate is further improved. The average layer thickness of the aforementioned porous layer is not particularly restricted as long as the transmittance of the substrate is improved. The average layer thickness preferably ranges from 0.1 $\mu$m to 3 $\mu$m, more preferably ranges from 0.5 $\mu$m to 1 $\mu$m, furthermore preferably ranges from 0.1 $\mu$m to 0.5 $\mu$m, furthermore preferably ranges from 0.05 $\mu$m to 0.3 $\mu$m (50 nm to 300 nm), furthermore preferably ranges from 80 nm to 250 nm, furthermore preferably ranges from 130 nm to 250 nm, and in particular, preferably ranges from 130 nm to 180 nm.

The surface of the aforementioned porous layer preferably has a surface roughness with a maximum height ($R_{max}$) of not more than 50 nm, and the maximum height is more preferably not more than 30 nm. The particle size of titanium oxide contained in the porous layer preferably ranges from 1 nm to 100 nm, more preferably ranges from 1 nm to 50 nm, and furthermore preferably ranges from 1 nm to 20 nm.

In the present invention, microasperities are formed on the surface of the substrate itself, not by means of an etching treatment or the like, but by forming a thin porous layer on the surface thereof. For this reason, it is not necessary to subject the substrate itself to microprocessing, and it is easy to form asperities. In addition, the agent for increasing an amount of transmitted visible light which is a precursor of the porous layer is applied to the surface of the substrate. For this reason, the surface of the substrate can be treated over a wide range, and even in the case of a substrate having a curved surface such as a lens, asperities can be easily formed.

Therefore, in the present invention, it is possible to increase the amount of transmitted visible light of the substrate and reduce the reflectivity of the substrate by a simple method which is applicable regardless of materials and forms of the substrate. Thereby, a highly light-transmissive substrate in which the transmittance is increased and the optical properties are improved can be provided.

In the agent for increasing an amount of transmitted visible light of the present invention, various positively charged substances, negatively charged substances, or mixtures thereof can be blended in addition to the aforementioned components. Thereby, contamination of the surface of the substrate can be prevented or reduced. At the same time, reduction of light transmission due to adsorption of organic compounds in the vicinity of the aforementioned layer, radicals and the like, may be prevented because of the function thereof returning the radical molecules such as oxygen, hydrogen, nitrogen and the like under an excited state by the electrons from the anatase-type titanium oxide and/or the silicon compound to the ground state thereof. For this reason, a high light-permissive property can be maintained.

As examples of the aforementioned positively charged substance, mention may be made of, for example, a positive ion; a conductor or dielectric having positive charges; a composite formed from a conductor and a dielectric or a semiconductor, having positive charges; and a mixture thereof.

The aforementioned positive ion is not particularly restricted. As the positive ion, an ion of an alkali metal such as sodium and potassium; an ion of an alkali earth metal such as calcium; and an ion of another metal element such as aluminum, tin, cesium, indium, cerium, selenium, chromium, nickel, antimony, iron, copper, manganese, tungsten, zirconium, zinc, or the like, are preferable. In particular, a copper ion is preferable. In addition, a cationic dye such as methyl violet, Bismarck brown, methylene blue, malachite green, or the like, an organic molecule having a cationic group such as a silicone modified with a quaternary nitrogen atom-containing group, or the like can also be employed. The valence of the ion is not particularly restricted. For example, a monovalent to tetravalent positive ion can be employed.

As a supply source of the aforementioned metal ion, a metal salt can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, cesium chloride, indium (III) chloride, cerium (III) chloride, selenium tetrachloride, copper (II) chloride, manganese chloride, tungsten tetrachloride, tungsten oxydichloride, potassium tungstate, zirconium oxychloride, zinc chloride, barium carbonate, and the like. In addition, a metal hydroxide such as aluminum hydroxide, iron hydroxide, chromium hydroxide, and indium hydroxide; a hydroxide such as tungstosilicic acid; or oxides such as fat oxides, can also be employed.

Examples of the conductor or dielectric having a positive charge include conductors or dielectrics in which positive charges are generated, other than the aforementioned positive ions. The conductor employed in the present invention is preferably a metal in view of durability. As examples thereof, mention may be made of metals such as aluminum, tin, cesium, indium, cerium, selenium, chromium, nickel, antimony, iron, silver, copper, manganese, platinum, tungsten, zirconium, zinc or the like and a metal oxide thereof. In addition, a composite or alloy of the aforementioned metals can also be employed.

The shape of the conductor is not particularly restricted. The conductor may be in any shape such as particles, flakes, fibers, or the like.

As the conductor, a metal salt of a certain metal can also be employed. As examples thereof, mention may be made of, for example, various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, platinum (II) chloride, tungsten tetrachloride, tungsten oxydichloride, potassium tungstate, gold chloride, zirconium oxychloride, zinc chloride, and the like. In addition, indium hydroxide, a hydroxide or oxide of tungstosilicic acid or the like can also be employed.

As examples of dielectrics having positive charges, mention may be made of, for example, dielectrics such as wool, nylon, and the like which are positively charged by friction.

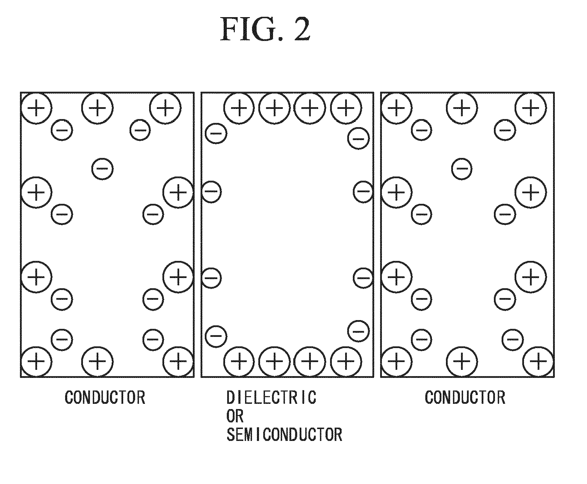

Next, the principle of imparting positive charges with the aforementioned composite is shown in FIG. 2. FIG. 2 is a diagram in which a combination of (a conductor)-(a dielectric or a semiconductor)-(a conductor) is arranged on the surface of a substrate or in a surface layer of the substrate, not shown in the drawing. The conductor can have a positively charged state on the surface due to the presence of free electrons at a high concentration in which electrons can freely move inside thereof. In addition, as the conductor, a conductive substance containing positive ions can also be employed.

On the other hand, the dielectric or semiconductor adjacent to the conductors is subjected to charge polarization by the effects of the charge conditions on the surface of the conductor. As a result, at the side of the dielectric or semiconductor adjacent to the conductor, negative charges are produced, while at the side of the dielectric or semiconductor which is not adjacent to the conductor, positive charges are produced. Due to the aforementioned effects, the surface of the combination of (a conductor)-(a dielectric or a semiconductor)-(a conductor) is positively charged, and positive charges are provided on the surface of the substrate. The size of the aforementioned composite (which means the length of the longest axis passing through the composite) can range from 1 nm to 100 $\mu$m, and preferably ranges from 1 nm to 10 $\mu$m, more preferably ranges from 1 nm to 1 $\mu$m, and particularly preferably ranges from 1 nm to 100 nm.

The conductor for forming the composite employed in the present invention is preferably a metal in view of durability. Examples thereof include metals such as aluminum, tin, cesium, indium, cerium, selenium, chromium, nickel, antimony, iron, silver, copper, manganese, platinum, tungsten, zirconium, zinc, or the like. In addition, an oxide, a composite or alloy of the aforementioned metals can also be employed. The shape of the conductor is not particularly restricted. The conductor may be in any shape such as particles, flakes, fibers, or the like.

As the conductor, a metal salt of a certain metal can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, platinum (II) chloride, tungsten tetrachloride, tungsten oxydichloride, potassium tungstate, gold chloride, zirconium oxychloride, zinc chloride, iron lithium phosphate, and the like. In addition, a hydroxide of the aforementioned conductive metal such as aluminum hydroxide, iron hydroxide, chromium hydroxide, or the like, as well as an oxide of the aforementioned conductive metal such as zinc oxide or the like can also be employed.

As the conductor, a conductive polymer such as polyaniline, polypyrrol, polythiophene, polythiophene vinylon, polyisothianaphthene, polyacetylene, polyalkyl pyrrol, polyalkyl thiophene, poly-p-phenylene, polyphenylene vinylon, polymethoxyphenylene, polyphenylene sulfide, polyphenylene oxide, polyanthrathene, polynaphthalene, polypyrene, polyazulene, or the like can also be employed.

As the semiconductor, for example, C, Si, Ge, Sn, GaAs, Inp, GeN, ZnSe, PbSnTe, or the like, can be employed, and a semiconductor metal oxide, a photosemiconductor metal, or a photosemiconductor metal oxide can also be employed. Preferably, in addition to titanium oxide ($TiO_2$), ZnO, $SrTiOP_3$, CdS, CdO, CaP, InP, $In_2O_3$, CaAs, $BaTiO_3$, $K_2NbO_3$, $Fe_2O_3$, $Ta_2O_3$, $WO_3$, NiO, $Cu_2O$, SiC, $SiO_2$, $MoS_3$, InSb, $RuO_2$, $CeO_2$, or the like can be employed. A compound in which the photocatalytic effects are inactivated by Na or the like is preferable.

As the dielectric, barium titanate (PZT) which is a strong dielectric, so-called SBT, BLT, or a composite metal such as PZT, PLZT-(Pb, La) (Zr, Ti)$O_3$, SBT, SBTN-$SrBi_2$(Ta, Nb)$_2O_9$, BST-(Ba, Sr)$TiO_3$, LSCO-(La, Sr)$CoO_3$, BLT, BIT-(Bi, La)$_4Ti_3O_{12}$, BSO-$Bi_2SiO_5$, or the like can be employed. In addition, various weak dielectric materials such as a silane compound, a silicone compound, or a so-called organomodified silica compound, which is an organic silicon compound, or an organic polymer insulating film allylene ether-based polymer, benzocyclobutene, fluorine-based polymer parylene N or F, a fluorinated amorphous carbon, or the like can also be employed.

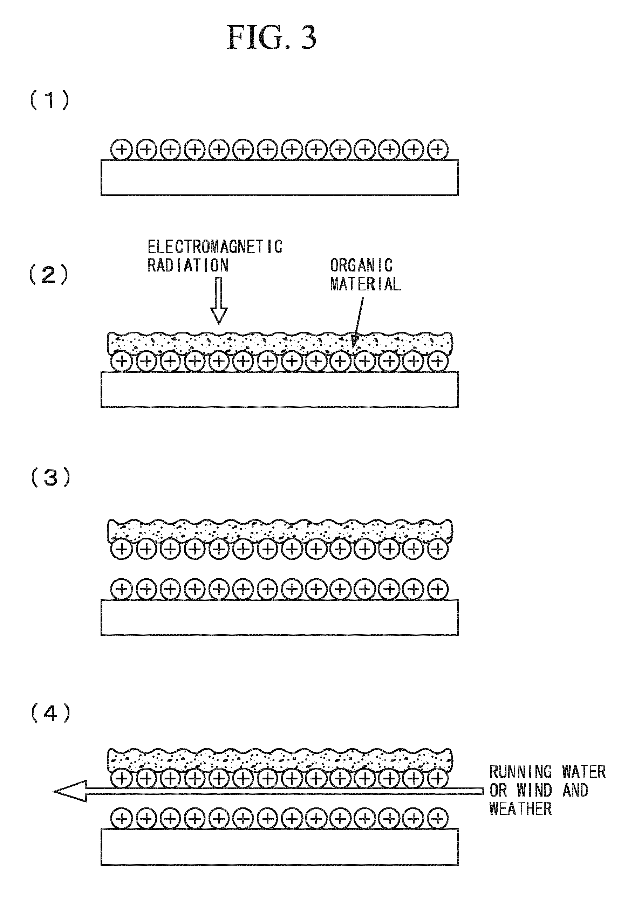

Next, a mechanism of removal of contaminants from the surface of the substrate which is positively charged is shown in FIG. 3.

First, positive charges are provided on the surface of the substrate (FIG. 3 (1)).

Contaminants are deposited on the surface of the substrate, followed by photooxidizing by means of the effects of electromagnetic radiation such as sunlight or the like. A photooxidation reaction indicates a phenomenon in which, when hydroxyl radicals ($^\cdot$OH) or singlet oxygen ($^1O_2$) are produced from oxygen ($O_2$) or moisture ($H_2O$) on the surface of an organic product or an inorganic product due to the effects of electromagnetic radiation such as sunlight or the like, electrons ($e^-$) are withdrawn from the aforementioned organic or inorganic product to thereby oxidize it. Due to the aforementioned oxidation, in an organic product, the molecular structure changes, so that discoloration or embrittlement which is called deterioration is observed; in an inorganic product, and in particular, a metal, rust occurs. The surface of the "oxidized" organic product or inorganic product is thus positively charged by the withdrawal of electrons ($e^-$). Thereby, the contaminants are also positively charged (FIG. 3 (2)).

Electrostatic repulsion of positive charges between the surface of the substrate and the contaminants is produced, and repulsion power is produced on the contaminants. Thereby, the fixing power of the contaminants to the surface of the substrate is reduced (FIG. 3 (3)).

By means of physical effects such as wind and weather, the contaminants are easily removed from the substrate (FIG. 3 (4)). Thereby, the substrate can self-clean.

By providing positive charges to the layer containing the organic silicon compound and inorganic silicon compound of the surface of the substrate as described above, adhesion of contaminants which are positively charged to the surface of the substance can be prevented. However, on the other hand, in the contaminants, materials which are negatively charged, such as chloride ion and the like in tap water, materials which are at first positively charged, but then negatively charged due to mutual interaction (friction or the like) with other substances and the like are present. The aforementioned contaminants which are negatively charged are easily adsorbed on the surface of the substrate which is positively charged. Therefore, the aforementioned layer may also have negative charges together therewith. Thereby, adherence of the contaminants having positive charges to the surface of the substrate can be prevented.

As a negatively-charged substance, mention may be made of, for example, a negative ion; a conductor or dielectric having negative charges; a composite formed from a conductor and a dielectric or a semiconductor, having negative charges; a substance having a photocatalytic function; and a mixture thereof.

The aforementioned negative ion is not particularly restricted. As the negative ion, a halogenide ion such as fluoride ion, chloride ion, iodide ion or the like; an inorganic ion such as a hydroxide ion, a sulfate ion, a nitrate ion, a carbonate ion, or the like; and an organic ion such as an acetate ion, or the like may be mentioned. The valence of the ion is not particularly restricted. For example, a monovalent to tetravalent negative ion can be employed.

As the conductor or dielectric having negative charges, mention may be made of conductors or dielectrics in which negative charges are generated, other than the aforementioned negative ions. As examples thereof, mention may be made of colloids of metals such as gold, silver, platinum and the like; elements such as graphite, sulfur, selenium, tellurium and the like; sulfides such as arsenic sulfide, antimony sulfide, mercury sulfide and the like; clay, glass powder, quartz powder, asbestos, starch, cotton, silk, wool and the like; or dyes such as prussian blue, indigo, aniline blue, eosin, naphthol yellow and the like. Among these, colloids of metals such as gold, silver, platinum and the like are preferable. Silver colloids are particularly preferable. In addition thereto, negative electrodes of batteries, formed from various conductors as described above, and dielectrics such as Teflon (trademark), vinyl chlorides, polyethylenes and polyesters and the like, which are negatively charged, may be mentioned.

As the semiconductor, the aforementioned one can be used.

The photocatalytically functional substances contain specific metal compounds, and have a function of oxidizing and decomposing the organic and/or inorganic compounds on the surface of the aforementioned layer due to photoexcitation. It is generally believed that the photocatalytic principle is that a specific metal compound produces radical species such as $OH^-$ or $O_2^-$ from oxygen or moisture in the air by means of photoexcitation, and the aforementioned radical species oxidize-reduce-decompose the organic and/or inorganic compounds.

As the aforementioned metal compound, in addition to representative titanium oxide ($TiO_2$), $ZnO$, $SrTiOP_3$, $CdS$, $CdO$, $CaP$, $InP$, $In_2O_3$, $CaAs$, $BaTiO_3$, $K_2NbO_3$, $Fe_2O_3$, $Ta_2O_5$, $WO_3$, $NiO$, $Cu_2O$, $SiC$, $SiO_2$, $MoS_3$, $InSb$, $RuO_2$, $CeO_2$, and the like are known.

The photocatalytically functional substance may comprise a metal for improving photocatalytic effects (such as Ag or Pt). In addition, various substances such as metal salts or the like can be added within a range which does not deactivate the photocatalytic functions. As examples of the aforementioned metal salts, mention may be made of salts of metals such as aluminum, tin, chromium, nickel, antimony, iron, silver, cesium, indium, cerium, selenium, copper, manganese, calcium, platinum, tungsten, zirconium, zinc, or the like. In addition thereto, as some metals or non-metals, hydroxides or oxides thereof can also be employed. More particularly, examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, calcium chloride, platinum (II) chloride, tungsten tetrachloride, tungsten oxydichloride, potassium tungstate, gold chloride, zirconium oxychloride, zinc chloride, or the like. In addition, as compounds other than the metal salts, mention may be made of indium hydroxide, silicotungstic acid, silica sol, calcium hydroxide, or the like.

The aforementioned photocatalytically functional substance adsorbs, when excited, $OH^-$ (hydroxide radical) or $O_2^-$ (oxygenation radical) from adsorbed water and oxygen on the surface of a substance, and therefore, the surface thereof has a property of negative charges. If a positively-charged substance coexists therein, the photocatalytic function will be reduced or lost, depending on the concentration of the positive charges. However, in the present invention, the substance having a photocatalytic function does not need to exert oxidation decomposition effects on contaminants, and for this reason, it can be used as a negatively-charged substance.

The surface of the substrate which is negatively charged electrostatically repels negatively-charged contaminants in the same manner as that described in the positively-charged substrate shown in FIG. 3. For this reason, adhesion of the aforementioned contaminants to the surface of the substrate can be prevented.

On the other hand, in the contaminants, there are those which have initially carried positive charges, and then are negatively charged due to mutual interaction (friction or the like) with other substances. The aforementioned contaminants carrying both positive charges and negative charges can be easily adsorbed on the surface of the substrate which carries single charges. In this case, by imparting both positive charges and negative charges to the substrate, adherence of the aforementioned contaminants to the surface of the substrate can be prevented.

For example, for the contaminants having both positive charges and negative charges such as pollens or the like, by blending both a positively-charged substance and a negatively-charged substance into the agent for increasing an amount of transmitted visible light of the present invention, adhesion of the aforementioned contaminants to the substrate can be prevented or reduced. For example, on the surface of the substrate having both positive charges and negative charges, contamination-inducing substances having amphoteric charges or negative charges such as yellow sand or kaolin clay micropowders, algal fungi or pollens, and chloride ions in tap water are electrostatically repelled, and thereby the adhesion thereof onto the surface of the substrate is prevented. Thus, changes in the substrate surface properties due to the adhesion of such impurities are prevented, and the surface of the substrate can be maintained to be clean. If the amount of one of the positive charges and negative charges is excessively large, impurities having negative charges or contaminants having positive charges produced by photooxidation tend to be adhered, and as a result, the surface of the substrate may be contaminated. Therefore, it is preferable that the positive charge amount and the negative charge amount on the surface of the substrate be substantially balanced with each other. Specifically, it is preferable that the electrostatic voltage on the surface of the substrate be within from -50 V to 50 V.

In addition, in contaminants formed from an insulator having a relatively reduced charge amount of positive charges or negative charges (such as silicone oil), depending on the type of the aforementioned contaminants, when only strong positive charges or negative charges are present on the surface of a substrate, the surface charge of the contaminants may invert, and as a result, the aforementioned contaminants may adhere onto the surface of the aforementioned substrate. For this reason, by coexistence of both a positively-charged substance and a negatively-charged substance, the aforementioned adherence can be prevented or reduced. Thereby, reduction of the transmittance can be prevented.

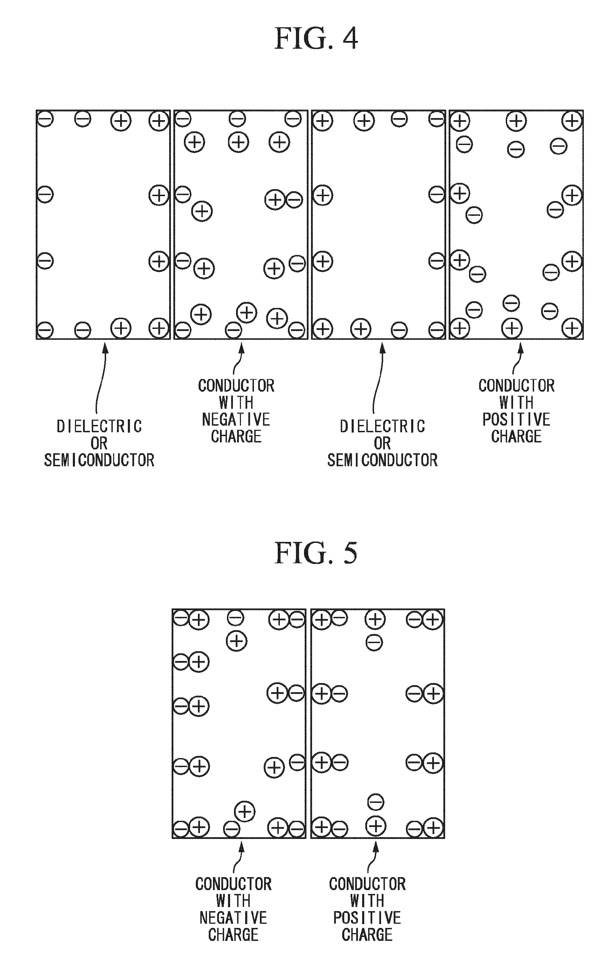

FIG. 4 is a diagram showing one of the modes of imparting both positive charges and negative charges to the layer of the surface of the substrate, in which a combination of (a dielectric or a semiconductor)-(a conductor having negative charges)-(a dielectric or a semiconductor)-(a conductor having positive charges) is used as the layer. As the conductor having negative charges and the conductor having positive charges shown in FIG. 4, those described above can be used.

As shown in FIG. 4, the dielectric or semiconductor adjacent to the conductor having negative charges is subjected to charge polarization by the effects of the charge conditions on the surface of the conductor. As a result, at the side of the dielectric or semiconductor adjacent to the conductor having negative charges, positive charges are produced, while at the side of the dielectric or semiconductor which is adjacent to the conductor having positive charges, negative charges are produced. Due to the aforementioned effects, the surface of the combination of (a dielectric or a semiconductor)-(a conductor)-(a dielectric or a semiconductor)-(a conductor) shown in FIG. 4 is positively or negatively charged. The size of the aforementioned composite (which means the length of the longest axis passing through the composite) of the conductor and the dielectric or semiconductor can range from 1 nm to 100 $\mu$m, and preferably ranges from 1 nm to 10 $\mu$m, more preferably ranges from 1 nm to 1 $\mu$m, and particularly preferably ranges from 1 nm to 100 nm.

FIG. 5 is a diagram showing another mode of imparting positive charges and negative charges to the aforementioned layer.

In FIG. 5, a conductor having negative charges is adjacent to a conductor having positive charges, and the amount of the positive charges and negative charges is reduced due to contact disappearance or the like. As the conductor having negative charges and the conductor having positive charges, those described above can be used.

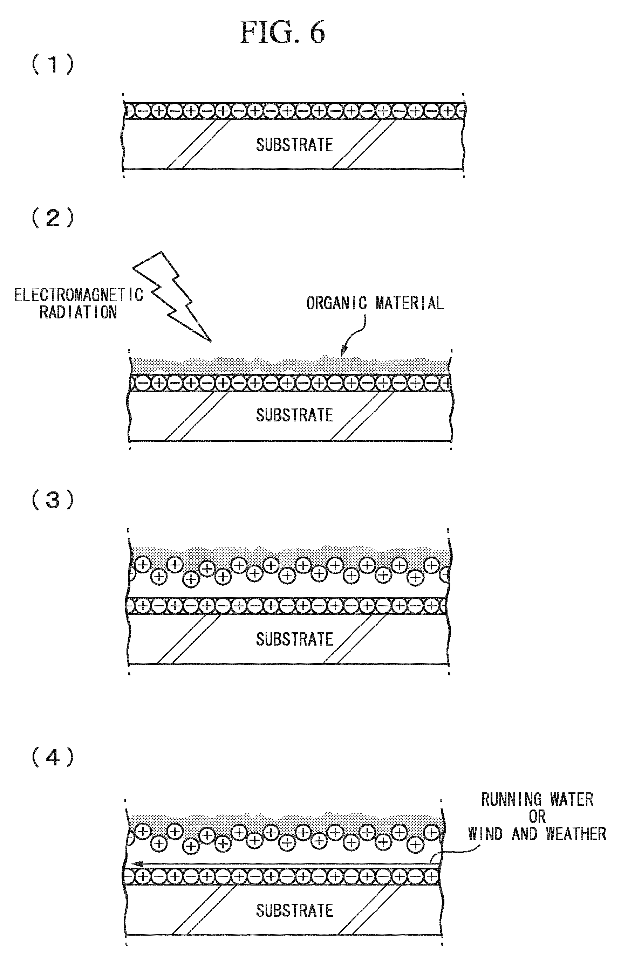

Next, a mechanism of removal of contaminants from the surface of the layer which is positively and negatively charged is shown in FIG. 6.

In the aforementioned mode, by arranging a negatively-charged substance selected from a negative ion; a conductor or dielectric having negative charges; a composite formed from a conductor and a dielectric or a semiconductor, having negative charges; a substance having a photocatalytic function; and the mixture thereof, the layer is positively and negatively charged (FIG. 6 (1)).

Contaminants are deposited on the surface of the layer, and then photooxidized by means of the effects of electromagnetic radiation such as sunlight or the like. Thereby, the contaminants are also positively charged (FIG. 6 (2)).

Electrostatic repulsion of positive charges between the surface of the layer and the contaminants is produced, and a repulsion force acts on the contaminants. Thereby, the fixing power of the contaminants to the surface of the layer is reduced (FIG. 6 (3)).

By means of physical effects such as wind and weather, the contaminants are easily removed from the layer (FIG. 6 (4)). Thereby, the substrate can self-clean.

Since there are negative charges as well on the surface of the layer, contaminants or contaminant-inducing substances having negative charges such as kaolin clay fine powder, chloride ions or the like can also be repelled and the fixing power thereof to the surface of the layer is reduced.

The aforementioned agent for increasing an amount of transmitted visible light may comprise various metals (such as Ag or Pt). In addition, various substances such as metal salts or the like can be added within a range which does not deactivate the functions. As examples of the aforementioned metal salts, mention may be made of salts of metals such as aluminum, tin, chromium, nickel, antimony, iron, silver, cesium, indium, cerium, selenium, copper, manganese, calcium, platinum, tungsten, zirconium, zinc, or the like. In addition thereto, as some metals or non-metals, hydroxides or oxides thereof can also be employed. More particularly, examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, calcium chloride, platinum (II) chloride, tungsten tetrachloride, tungsten oxydichloride, potassium tungstate, gold chloride, zirconium oxychloride, zinc chloride, or the like. In addition, as compounds other than the metal salts, mention may be made of indium hydroxide, silicotungstic acid, silica sol, calcium hydroxide, or the like.

The aforementioned positively-charged substances, negatively-charged substances, or mixtures thereof make the surface of the substrate hydrophilic. For this reason, formation of water droplets on the surface of the substrate can be prevented or reduced. Therefore, reduction of light transmittance caused by inflection and diffuse reflection due to water droplets on the surface of the substrate can be prevented.

In the present invention, an intermediate layer may be formed between the aforementioned layer containing the organic silicon compound and inorganic silicon compound, and the surface of the substrate. The aforementioned intermediate layer can be formed from various types of organic or inorganic substances which can impart hydrophilic properties or hydrophobic properties or water repellent properties or oil repellent properties to the substrate.

The substrate obtained in the present invention can be used in any field. In particular, the substrate is useful as a component for an apparatus in which improvements in light transmittance and reduction of reflectivity are required. For example, the substrate can be used in a face glass of a photocell such as a solar cell, a silicon cell which is a power generation element, a face glass of various types of displays such as a liquid crystal display, a plasma display, an organic EL display, or a tube television; an optical element such as a lens; a construction member such as window glass; as well as various types of an optical receiver, an illuminator, a projector, a polarization glass, an optical glass and the like. In particular, in the case of using the substrate in a cell surface of a power generator or a face glass of a photocell such as a solar cell used outdoors, the high light-transmissive property can contribute to improvements in efficiency of power generation.

In addition, in the case of surface-treating the substrate using the agent for increasing an amount of transmitted visible light containing a positively-charged substance, a negatively-charged substance or a mixture thereof, adherence of contaminants can be prevented or reduced for a long period of time by means of electrostatic repulsion on the surface of the substrate interdependently with effects of preventing formation of water droplets due to hydrophilization of the surface of the substrate. For this reason, the high light-transmissive property of the substrate can be maintained over time. For example, a photocell using the aforementioned substrate as a face glass can continuously generate power with increased efficiency outdoors.

EXAMPLES

Hereinafter, the present invention is described in detail with reference to examples. It should be understood that the present invention is not restricted to these examples.

Evaluation 1

Evaluation Liquid 1

Each of a silica sol liquid WM-12 manufactured by TAMA CHEMICALS CO., LTD.), an aqueous dispersion of copper and zirconium-doped titania: Z 18-1000 Super A (manufactured by SUSTAINABLE TITANIA TECHNOLOGY INC.), and an aqueous dispersion of silver-doped titania SP-2 (manufactured by SUSTAINABLE TITANIA TECHNOLOGY INC.) was diluted with pure water so as to have a concentration of 0.6% by weight, and they were mixed in a weight ratio of 8:1:1. A commercially available white superior soft sugar, in an amount of 2% by weight, and an organic silicon surfactant: Z-B (manufactured by SUSTAINABLE TITANIA TECHNOLOGY INC.), in an amount of 20% by weight, were added to the aforementioned mixture. Thereby, Evaluation Liquid 1 was prepared.

Evaluation Liquid 2

Each of a silica sol liquid WM-12 manufactured by TAMA CHEMICALS CO., LTD.), an aqueous dispersion of tin and copper-doped titania: SnZ 18-1000 A (manufactured by SUSTAINABLE TITANIA TECHNOLOGY INC.), and an aqueous dispersion of iron-doped titania prepared by a method described below was diluted with pure water so as to have a concentration of 0.6% by weight, and they were mixed in a weight ratio of 8:1:1. A commercially available white superior soft sugar, in an amount of 2% by weight, and an organic silicon surfactant: Z-B (manufactured by SUSTAINABLE TITANIA TECHNOLOGY INC.), in an amount of 20% by weight, were added to the aforementioned mixture. Thereby, Evaluation Liquid 2 was prepared.

Aqueous dispersion of iron-doped titania

0.712 g of $FeCl_3/6H_2O$ was completely dissolved into 500 ml of pure water. To this solution, 10 g of a 50% solution of titanium (IV) tetrachloride (Sumitomo Sticks Co., Ltd.) was added, and pure water was further added until the solution reached 1000 ml. An ammonia water which had been prepared by 10 times dilution of 25% aqueous ammonia (manufactured by TAKASUGI PHARMACEUTICAL CO., LTD.) was added dropwise to this in order to adjust the pH thereof to 7.0, and thereby a mixture of iron hydroxide and titanium hydroxide was precipitated. The precipitate was washed with pure water until the conductivity of the supernatant fluid became 0.8 mS/m or less, and washing was ended when the conductivity became 0.744 mS/m in order to obtain 420 g of a hydroxide-containing liquid with a concentration of 0.47% by weight. Next, the aforementioned hydroxide-containing liquid was cooled to between 1°C and 5°C, and was stirred for 16 hours after adding 25 g of a 35% aqueous solution of hydrogen peroxide (manufactured by TAIKI YAKUHIN KOGYO CO., LTD.). Thereby, 440 g of a clear deep yellow brown dispersion of iron-doped amorphous titanium peroxide with a concentration of 0.44% by weight was obtained. By concentrating this with an ultrafiltration concentrator, 220 g of the dispersion with a concentration of 0.85% by weight was prepared.

Evaluation Liquid 3

Each of a silica sol liquid WM-12 (manufactured by TAMA CHEMICALS CO., LTD.), and an aqueous dispersion of copper and zirconium-doped titania: Z 18-1000 Super A (manufactured by SUSTAINABLE TITANIA TECHNOLOGY INC.) was diluted with pure water so as to have a concentration of 0.6% by weight, and they were mixed in a weight ratio of 9:1. A commercially available white superior soft sugar, in an amount of 2% by weight, and an organic silicon surfactant: Z-B (manufactured by SUSTAINABLE TITANIA TECHNOLOGY INC.), in an amount of 20% by weight, were added to the aforementioned mixture. Thereby, Evaluation Liquid 3 was prepared.

Evaluation Liquid 4

A silica sol liquid WM-12 (manufactured by TAMA CHEMICALS CO., LTD.) was diluted with pure water so as to have a concentration of 0.6% by weight. A commercially available white superior soft sugar, in an amount of 2% by weight, and an organic silicon surfactant: Z-B (manufactured by SUSTAINABLE TITANIA TECHNOLOGY INC.), in an amount of 20% by weight, were added thereto. Thereby, Evaluation Liquid 4 was prepared.

Evaluation Liquid 5

An aqueous dispersion of anatase-type titania: STi-560 B (manufactured by SUSTAINABLE TITANIA TECHNOLOGY INC.), in an amount of 10% by weight, was added to Evaluation Liquid 4. Thereby, Evaluation Liquid 5 was prepared.

Comparative Liquid 1

A silica sol liquid WM-12 (manufactured by TAMA CHEMICALS CO., LTD.) was diluted with pure water so as to have a concentration of 0.6% by weight. A commercially available white superior soft sugar, in an amount of 2% by weight, was added thereto. Thereby, Comparative Liquid 1 was prepared.

Preparation of Evaluation Substrates

Each of Evaluation Liquids 1 to 5 and Comparative Liquid 1 was independently applied onto a commercially available transparent substrate made of float glass with a size of 50 mm X 50 mm (thickness = 3 mm) in a ratio of 20 g/m$^2$ by means of spray coating, followed by naturally drying, and then burning for 30 minutes at 580°C (heat treatment at high temperature). Thereby, Evaluation Substrates 1 to 5 and Comparative Substrate 1 were prepared.
In addition, a non-treated glass substrate was used as a control.

Evaluation method

The transmittance and reflectivity of visible light of each of Evaluation Substrates 1 to 5, Comparative Substrate 1 and Control were measured by means of a UV/visible light photometer V-550 DS (manufactured by JASCO CO., LTD.) under the following conditions. Photometry mode = %T, %R, response = Medium, scanning rate = 100 nm/min, initial wavelength = 780 nm, completion wavelength = 380 nm, and interval of loading data = 1.0 nm. The results are shown in Table 1.
Table 1

|  | Evaluation Substrate 1 | Evaluation Substrate 2 | Evaluation Substrate 3 | Evaluation Substrate 4 | Evaluation Substrate 5 | Comparative Substrate 1 | Control |
|---|---|---|---|---|---|---|---|
| Transmittance of visible light (A) | 95.41% | 95.39% | 94.88% | 93.81% | 94.10% | 91.25% | 89.97% |
| Reflectivity of visible light (B) | 5.98% | 6.50% | 6.12% | 5.10% | 5.86% | 6.20% | 8.06% |
| Reflection reduction rate (C)(Control(B) - (B)) | 2.08% | 1.56% | 1.94% | 2.96% | 2.20% | 1.85% | - |
| Transmitted light increase rate ((A) - Control (A) - (C)) | 3.36% | 3.86% | 2.97% | 0.88% | 1.93% | 0.58% | - |
| Visible light absorption rate of substrate = 1.95% | | | | | | | |

From the results shown in Table 1, it can be seen that the light-transmissive properties of Evaluation Substrates 1 to 5 and Comparative Substrate 1 are significantly improved, as compared with that of Control. In addition, in general, the sum of the transmittance of visible light (A), the reflectivity of visible light (B) and the visible light absorption rate of the substrate is expected to be 100% or less, but in the case of Evaluation Substrates 1 to 5, the sum of the transmittance of visible light (A), the reflectivity of visible light (B) and the visible light absorption rate of the substrate exceeds 100%. This indicates that in the visible light wavelength region, the amount of light transmitted through the substrate is increased. The order of the amount of transmitted light of Evaluation Substrates 1 to 5 and Comparative Substrate 1 are as follows: Evaluation Substrate 2 > Evaluation Substrate 1 > Evaluation Substrate 3 > Evaluation Substrate 5 > Evaluation Substrate 4 > Comparative Substrate 1.

Evaluation 2

Evaluation Liquids 6 to 10 and Comparative Liquid 2

Evaluation Liquids 6 to 10 and Comparative Liquid 2 were respectively prepared in the same manner as that of Evaluation Liquids 1 to 5 and Comparative Liquid 1, with the exception of adding no commercially available white superior soft sugar, corresponding to a thermally-degradable organic compound.

Preparation of Evaluation Substrates

Evaluation Liquids 6 to 10 and Comparative Liquid 2 were applied in the same manner as that of the Preparation of Evaluation Substrates in Evaluation 1, followed by heating for 15 minutes at 80°C, drying, then cleansing with water, and further drying (non-heat treatment). Thereby, Evaluation Substrates 6 to 10 and Comparative Substrate 2 were prepared. In addition, a non-treated glass substrate was used as a control.

Evaluation method

In the same manner as the evaluation method described in Evaluation 1, the transmittance and reflectivity of visible light with respect to Evaluation Substrates 6 to 10, Comparative Substrate 2, and Control were independently measured. The results are shown in Table 2.
Table 2

|  | Evaluation Substrate 6 | Evaluation Substrate 7 | Evaluation Substrate 8 | Evaluation Substrate 9 | Evaluation Substrate 10 | Comparative Substrate 2 | Control |
|---|---|---|---|---|---|---|---|
| Transmittance of visible light (A) | 92.51 % | 93.11 % | 92.51 % | 91.45% | 92.48% | 90.91 % | 89.97% |
| Reflectivity of visible light (B) | 7.90% | 7.64% | 7.84% | 7.01% | 6.71% | 6.76% | 8.06% |
| Reflection reduction rate (C)(Control(B) - (B)) | 0.16% | 0.42% | 0.22% | 1.05% | 1.35% | 1.30% | - |
| Transmitted light increase rate ((A) - Control (A) - (C)) | 2.38% | 2.72% | 2.02% | 0.43% | 1.16% | -1.01 % | - |
| Visible light absorption rate of substrate = 1.95% | | | | | | | |

From the results shown in Table 2, it can be seen that even in the case of using no thermally-degradable organic compound, the same tendency as that described above can be exhibited.

Claims

1. An agent for increasing an amount of transmitted visible light of a light-transmissive substrate comprising an organic silicon compound and an inorganic silicon compound.

2. The agent for increasing an amount of transmitted visible light according to Claim 1, further comprising titanium oxide.

3. The agent for increasing an amount of transmitted visible light according to Claim 2, wherein said titanium oxide is a metal-doped titanium oxide.

4. The agent for increasing an amount of transmitted visible light according to Claim 2 or 3, wherein said titanium oxide is titanium peroxide.

5. The agent for increasing an amount of transmitted visible light according to any one of Claims 1 to 4, further comprising a thermally-degradable organic compound.

6. The agent for increasing an amount of transmitted visible light according to Claim 5, wherein said thermally-degradable organic compound is a sugar or a sugar alcohol.

7. The agent for increasing an amount of transmitted visible light according to Claim 6, wherein said sugar is at least one selected from the group consisting of monosaccharides and disaccharides.

8. The agent for increasing an amount of transmitted visible light according to Claim 5, wherein said thermally-degradable organic compound is a water-soluble organic polymer.

9. The agent for increasing an amount of transmitted visible light according to any one of Claims 1 to 8, further comprising one or more types of positively-charged substances selected from the group consisting of:

   (1) a positive ion;
   (2) a conductor or dielectric having positive charges; and
   (3) a composite formed from a conductor, and a dielectric or a semiconductor, having positive charges.

10. The agent for increasing an amount of transmitted visible light according to any one of Claims 1 to 8, further comprising one or more types of negatively-charged substances selected from the group consisting of:

    (4) a negative ion;
    (5) a conductor or dielectric having negative charges;
    (6) a composite formed from a conductor, and a dielectric or a semiconductor, having negative charges; and
    (7) a substance having a photocatalytic function.

11. The agent for increasing an amount of transmitted visible light according to any one of Claims 1 to 8, further comprising both
    one or more types of positively-charged substances selected from the group consisting of:

    (1) a positive ion;
    (2) a conductor or dielectric having positive charges; and
    (3) a composite formed from a conductor, and a dielectric or a semiconductor, having positive charges, and
    one or more types of negatively-charged substances selected from the group consisting of:
    (4) a negative ion;
    (5) a conductor or dielectric having negative charges;
    (6) a composite formed from a conductor, and a dielectric or a semiconductor, having negative charges; and
    (7) a substance having a photocatalytic function.

12. A process for producing a highly light-transmissive substrate **characterized by** comprising applying the agent for increasing an amount of transmitted visible light as recited in any one of Claims 1 to 11 to a light-transmissive substrate, and carrying out a heat treatment or a non-heat treatment.

13. The process for producing a highly light-transmissive substrate according to Claim 12, wherein at least one part of said substrate is formed from a resin, a metal or glass.

14. The process for producing a highly light-transmissive substrate according to Claim 12 or 13, wherein said heat treatment is carried out at temperatures of 400°C or more.

15. A highly light-transmissive substrate obtained by the method as recited in any one of Claims 12 to 14.

16. An optical element or an optical member equipped with the highly light-transmissive substrate as recited in Claim 15.

**17.** A process for increasing an amount of visible light transmitted by a light-transmissive substrate, **characterized by** forming a layer comprising an organic silicon compound and an inorganic silicon compound on a surface of a light-transmissive substrate.

# FIG. 1

| Ni,Co,Cu,Zr,Sn,Mn,Fe,Zn,Au,Ag,Pt,<br>Ge, Hf, Y, La, Ce, Pd, V, Nb, Ca, Ta COMPOUNDS |
|---|
| Ni COMPOUNDS : Ni(OH)$_2$, NiCl$_2$ etc. |
| Co COMPOUNDS : Co(OH)NO$_3$, CoCl$_2$, Co(OH)$_2$,<br>CoSO$_4$ etc. |
| Cu COMPOUNDS : CuSO$_4$, Cu(OH)$_2$, Cu(NO$_3$)$_2$,<br>CuCl$_2$, Cu(CH$_3$COO)$^2$ etc. |
| Zr COMPOUNDS : Zr(OH)$_3$, ZrCl$_4$, ZrCl$_2$ etc. |
| Sn COMPOUNDS : Sn(OH)$^+$, SnCl$_4$, SnCl$_2$ etc. |
| Mn COMPOUNDS : Mn(NO$_3$)$_2$, MnSO$_4$, MnCl$_2$ etc. |
| Fe COMPOUNDS : Fe(OH)$_3$, FeCl$_3$ etc. |
| Zn COMPOUNDS : Zn(NO$_3$)$_2$, ZnSO$_4$, ZuCl$_2$ etc. |
| Au COMPOUNDS : AuCl, AuCl$_3$, AuOH, Au(OH)$_2$,<br>Au$_2$O, Au$_2$O$_3$, etc. |
| Ag COMPOUNDS : AgNO$_3$, AgF, AgClO$_3$, AgOH,<br>Ag(NH$_3$)OH, Ag$_2$SO$_4$, etc. |
| Pt COMPOUNDS : PtCl$_2$, PtO, Pt(NH$_3$)Cl$_2$,<br>PtO$_2$, PtCl$_4$, [Pt(OH)$_6$]$^{2-}$etc. |
| Ge COMPOUNDS : GeO, Ge(OH)$_2$, GeCl$_2$, GeH$_4$,<br>GeFe, GeCl$_4$, etc. |
| Hf COMPOUNDS : HfCl$_2$, HfO$_2$, Hf(OH)$^{3+}$, HfCl$_4$, etc. |
| Y COMPOUNDS : Y$_2$O$_3$, Y(OH)$_3$, YCl$_3$, etc. |
| La COMPOUNDS : La$_2$O$_3$, LaCl$_3$, La(OH)$_3$, etc |
| Ce COMPOUNDS : CeO$_3$, Ce(OH)$_3$, CeCl$_3$, etc |
| Pd COMPOUNDS : [Pd(H$_2$O)$_4$]$^{2+}$, PdCl$_2$, PdO$_2$, etc |
| V COMPOUNDS : VCl$_2$, VCl$_4$, VOSO$_4$, etc |
| Nb COMPOUNDS : NbO$_2$, NbF$_4$, NbCl$_4$, etc |
| Ca COMPOUNDS : Ca(OH)$_2$, CaCl$_2$, CaSo$_4$, etc |
| Ta COMPOUNDS : TaF$_3$, TaCl$_3$, TaCl$_4$, TaO$_2$, etc |

TiCl$_4$ (50%)   PURE WATER   NH$_4$OH (25%)   PURE WATER

DILUTE        DILUTE

NEUTRALIZATION REACTION

SOLID-LIQUID SEPARATION

GEL OF PRECIPITATE

PURE WATER → WASH → WASTE WATER

H$_2$O$_2$ (35%)   COOL

PEROXIDATE

HEAT

ULTRAFILTRATION        ULTRAFILTRATION

AMORPHOUS-TYPE TITANIUM PEROXIDE DISPERSION    ANATASE-TYPE TITANIUM PEROXIDE DISPERSION

# FIG. 2

CONDUCTOR          DIELECTRIC
                   OR
                   SEMICONDUCTOR          CONDUCTOR

# FIG. 3

(1)

(2)

ELECTROMAGNETIC
RADIATION

ORGANIC
MATERIAL

(3)

(4)

RUNNING WATER
OR WIND AND
WEATHER

# FIG. 4

DIELECTRIC
OR
SEMICONDUCTOR

CONDUCTOR
WITH
NEGATIVE
CHARGE

DIELECTRIC
OR
SEMICONDUCTOR

CONDUCTOR
WITH
POSITIVE
CHARGE

# FIG. 5

CONDUCTOR
WITH
NEGATIVE
CHARGE

CONDUCTOR
WITH
POSITIVE
CHARGE

# FIG. 6

(1)

SUBSTRATE

(2)

ELECTROMAGNETIC
RADIATION

ORGANIC MATERIAL

SUBSTRATE

(3)

SUBSTRATE

(4)

RUNNING WATER
OR
WIND AND WEATHER

SUBSTRATE

| INTERNATIONAL SEARCH REPORT | International application No. |
|---|---|
| | PCT/JP2009/058575 |

A. CLASSIFICATION OF SUBJECT MATTER
*G02B1/11(2006.01)i*

According to International Patent Classification (IPC) or to both national classification and IPC

B. FIELDS SEARCHED

Minimum documentation searched (classification system followed by classification symbols)
G02B1/11

Documentation searched other than minimum documentation to the extent that such documents are included in the fields searched
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 10-121042 A (Dow Corning Corp.), 12 May, 1998 (12.05.98), Claims; Par. No. [0003] & US 5891548 A & EP 834468 A1 & DE 69701120 T | 1,12-13, 15-17 |
| X | WO 2009/008419 A1 (Sustainable Technology Inc.), 15 January, 2009 (15.01.09), Claims; Par. Nos. [0004] to [0020], [0102] to [0150] (Family: none) | 1-17 |
| X | JP 10-183062 A (JSR Corp.), 07 July, 1998 (07.07.98), Claims; Par. Nos. [0006], [0009], [0011], [0043] & JP 10-183061 A | 1-4,12-13, 15-17 |

☐ Further documents are listed in the continuation of Box C.      ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 July, 2009 (06.07.09) | 14 July, 2009 (14.07.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S5070040 B
- JP H04242499 B
- JP H09165318 B